# EUROPÄISCHE PATENTSCHRIFT

(11) **EP 0 776 775 B1**
(45) Veröffentlichungstag und Bekanntmachung des Hinweises auf die Patenterteilung: **15.04.1998**
(21) Anmeldenummer: 96113993.8
(22) Anmeldetag: 02.09.1996
(51) Int. Cl.: B60B 27/00

(54) **Radlagerung**
Wheel bearing
Palier de roue

(30) Priorität: 08.12.1995 DE 29519479 U
(43) Veröffentlichungstag der Anmeldung: 04.06.1997
(73) Patentinhaber: Trenkamp & Gehle GmbH, 49413 Dinklage (DE)
(72) Erfinder: Gehle, Konrad, 49408 Dinklage (DE)
(74) Vertreter: Busse & Busse Patentanwälte

(56) Entgegenhaltungen:
- EP-A- 0 407 719
- EP-A- 0 475 088
- DE-A- 3 809 253
- US-A- 3 785 706
- US-A- 4 121 871

## Beschreibung

Die Erfindung bezieht sich auf eine Radlagerung gemäß dem Oberbegriff des Anspruchs 1.

Bei einer bekannten Radlagerung dieser Art (DE-A-38 09 253), wie sie insbesondere bei Radachsen von Lastkraftwagen und -anhängern Anwendung findet, ist die Radnabe mit den Wälzlagern und dem Stoßring zu einer Baueinheit zusammengefaßt, wobei der Stoßring durch einen Sicherungsring, oder -mutter am inneren Stirnende der Radnabe gesichert ist, um eine sehr einfache Montage und Demontage der Radlagerung zu gewährleisten.

Es ist ferner bei einer Radlagerung bekannt (US-A-4 121 871), eine montagegünstige Baueinheit aus Nabe und Wälzlagern in der Weise zu bilden, daß die Wälzlager sowohl im Bereich des inneren als auch im Bereich des äußeren Stirnendes der Radnabe jeweils durch einen Sprengring gegen axiale Bewegungen festgelegt sind.

Zur Demontage derartiger Radlagerungen ist es bekannt, eine Abziehkapsel zu verwenden, die mit dem äußeren Stirnende der Radnabe verschraubbar ist und einen zentralen Schraubbolzen umfaßt, der sich auf dem Stirnende des Achszapfens abstützt und bei einer Einschraubbewegung das Abziehen der Radlagerung herbeiführt.

Bei einer weiteren bekannten Radlagerung (EP-B-0 407 719) ist der Stoßring mit einem ersten Sprengring in der Radnabe gesichert, und die Achsmutter hat einen bis an die Innenwand der Radnabe heranreichenden Bund, über den sie mittels eines zweiten Sprengringes in der Nabe gesichert ist mit der Folge, daß die durch die beiden Sprengringe gesicherte Baueinheit nicht nur durch Aufschrauben der Achsmutter auf das Gewindeende des Achszapfens in Position gebracht, sondern zu ihrer Demontage durch eine Abschraubbewegung vom Achszapfen abgezogen werden kann. Die Sprengringe gewährleisten bei der bekannten Radlagerung den sicheren Zusammenhalt der Teile, erfordern jedoch den Einsatz von Spezialwerkzeug und einen hohen Kraftaufwand für ihr Ein- und Ausbauen, so daß ein Öffnen der vom Achszapfen abgezogenen Radlagerung für beispielsweise eine Überprüfung der Wälzlager mit entsprechendem Aufwand nur werkstattseitig durchführbar ist.

Der Erfindung liegt die Aufgabe zugrunde, eine Radlagerung der eingangs angegebenen Art zu schaffen, die eine Baueinheit bildet, die schnell, einfach und gefahrlos und ohne Verwendung von Spezialwerkzeug aufgelöst werden kann, wenn eine Zerlegung der Radlagerung zu Zwecken der Inspektion oder Instandsetzung erforderlich ist.

Diese Aufgabe löst die Erfindung durch eine Radlagerung mit den Merkmalen der Ansprüche 1 bzw. 13. Zahlreiche weitere Merkmale und Vorteile des Gegenstands der Erfindung ergeben sich aus den Unteransprüchen.

Bei der Ausgestaltung der Radlagerung nach der Erfindung kann die Radnabe mit sämtlichen zu ihrer drehbaren Lagerung auf dem Achszapfen verwendeten Teilen wie insbesondere dem Stoßring, den Wälzlagern, Distanz- und Dichtringen einschl. einer Fettfüllung für das Lager zu einer Baueinheit vormontiert werden, die an ihren beiden Stirnenden einfach und ohne Werkzeug mit dem Stoßring und dem Abschlußring kuppelbar und zur Auflösung der Baueinheit aber ebenso einfach entkuppelbar ist. Dabei können die Achsmutter und der Abschlußring unabhängig von der Nabe abgeschraubt bzw. abgenommen werden, während bei Vereinigung von Achsmutter und Abschlußring zu einem integralen Bauteil die Achsmutter als Abziehhilfe beim Abnehmen der gesamten Baueinheit benutzt werden kann.

Dementsprechend sind Wartungsarbeiten, wie sie in regelmäßigen Abständen durchzuführen sind, wesentlich erleichtert, da sie ohne Verwendung von Spezielwerkzeug durchgeführt werden können. Das Kuppeln und Entkuppeln von Nabe, Stoß- und Abschlußring ist überaus schnell möglich, da lediglich die radialen Ansätze des Abschlußringes und/oder des Stoßringes in ihre Position hinter der Innenseite der ihnen jeweils zugeordneten Ringschulter hinein- oder aus dieser wieder herausbewegt werden müssen.

Während bei der Ausgestaltung gemäß dem Anspruch 1 der Stoßring und der Abschlußring einzelne, über ihren Außenumfang radial vorstehende Ansätze aufweisen und die Radnabe nahe ihrem inneren und äußeren Stirnende jeweils mit der innenseitig ausgeformten Ringschulter versehen ist, weist entsprechend Anspruch 13 die Radnabe nahe ihrem inneren und äußeren Stirnende einzelne, über ihren Innenumfang radial einwärts vorstehende Ansätze auf, während der Stoßring und der Abschlußring mit der Radnabe durch Einführen eines äußeren Umfangteils hinter die Innenseite der Ansätze mit der Radnabe kuppelbar sind, um die gleichen Handhabungs- und Funktionsmöglichkeiten, die im Zusammenhang mit dem Anspruch 1 erläutert wurden, zu erbringen.

In der nachstehenden Beschreibung ist der Gegenstand der Erfindung anhand mehrerer in der Zeichnung schematisch veranschaulichter Ausführungsbeispiele näher erläutert. In der Zeichnung zeigt:
- Fig. 1: einen Axialschnitt durch ein erstes Ausführungsbeispiel einer Radlagerung mit abgebrochen dargestellten radialen Nabenteilen,
- Fig. 1A: eine äußere Stirnansicht der Radlagerung nach Fig. 1 bei abgenommener äußerer Staubkappe und fortgelassenem Sicherungssplint,
- Fig. 2: eine Stirnansicht eines inneren Stoßringes als Teil der Radlagerung in Einzeldarstellung, gesehen in Richtung des Pfeils II der Fig. 1,
- Fig. 3: einen Axialschnitt durch den Stoßring entsprechend der Darstellung in Fig. 1,
- Fig. 4: einen Querschnitt durch den Achszapfen mit einer Stirnansicht der Radlagerung, gesehen wiederum in Richtung des Pfeils II der Fig. 1,

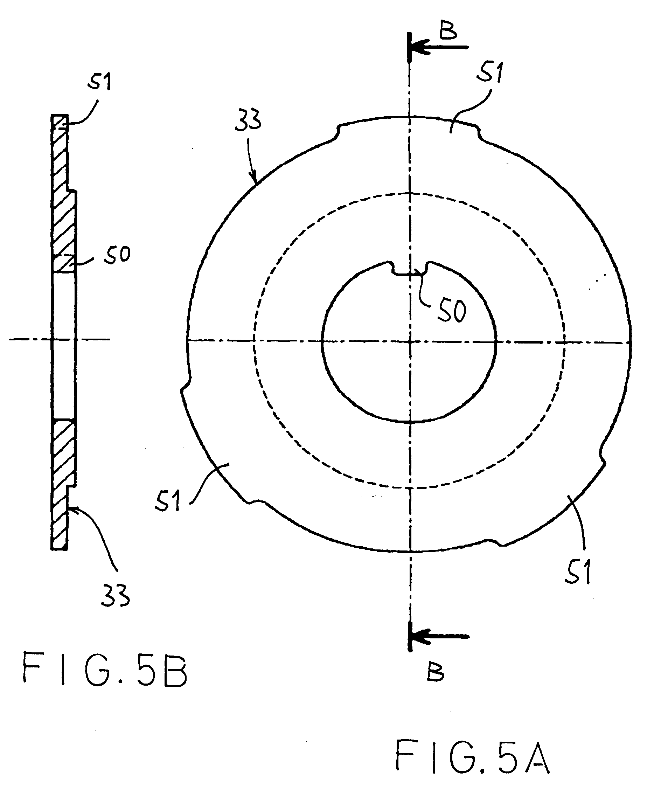

- Fig. 5A: eine Einzelteildarstellung der Radlagerung nach Fig. 1 in einer Stirnansicht,
- Fig. 5B: einen Schnitt nach der Linie B-B der Fig. 5A,
- Fig. 6: ein weiteres Ausführungsbeispiel einer Radlagerung in einer Darstellung entsprechend Fig. 1,
- Fig. 6A: eine Einzeldarstellung der Achsmutter nach Fig. 6 in einem Axialschnitt,
- Fig. 6B: eine Stirnansicht der Achsmutter nach Fig. 6A,
- Fig. 7: ein weiteres Ausführungsbeispiel in einer Darstellung entsprechend Fig. 1,
- Fig. 8: eine Ansicht des äußeren Stirnendes der Radlagerung nach Fig. 7 bei abgenommener äußerer Staubkappe,
- Fig. 9: ein weiteres Ausführungsbeispiel einer Radlagerung in einer Darstellung entsprechend Fig. 1,
- Fig. 10: eine Ansicht des äußeren Stirnendes der Radlagerung nach Fig. 9, wiederum bei abge nommener äußerer Staubkappe,
- Fig. 11: eine Darstellung entsprechend Fig. 10 zur Veranschaulichung einer anderen Betriebsstellung der Achsmutter in bezug auf die Radnabe,
- Fig. 12: ein weiteres Ausführungsbeispiel einer Radlagerung in einer Darstellung entsprechend Fig. 1 und
- Fig. 13: eine Ansicht des äußeren Stirnendes der Radlagerung nach Fig. 12, wiederum bei abgenommener äußerer Staubkappe.

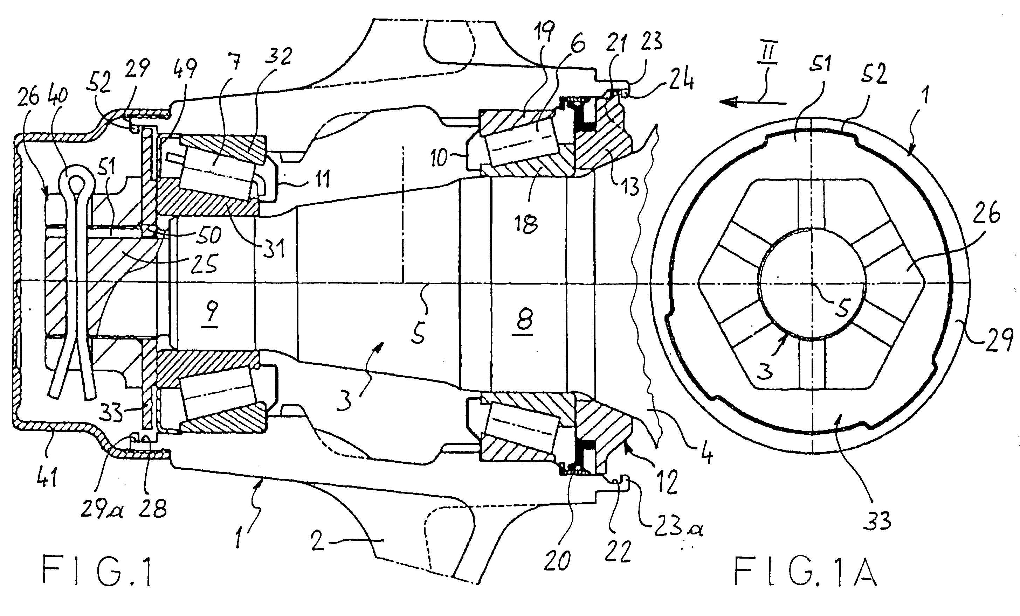

Die Fig. 1 zeigt eine als Ganzes mit 1 bezeichnete einteilige Radnabe, deren sich in radialer Richtung erstreckender Umfangsteil 2 zur Befestigung des Rades und der Bremstrommel abgebrochen dargestellt ist. Die Radnabe 1 ist in Fig. 1 in ihrem auf dem Achszapfen 3 montierten Zustand dargestellt, an den sich nach innen über einen Übergangsteil 4 mit kegelförmigem Außenmantel der eigentliche Achskörper (nicht dargestellt) der Radachse beispielsweise eines LKW-Anhängers anschließt. Die Radnabe 1 ist auf dem Achszapfen 3 mittels einer Wälzlageranordnung in Form zweier in Richtung seiner Längsachse 5 mit Abstand voneinander angeordneter Wälzlager 6 und 7 drehbar gelagert.

Die Wälzlager 6 und 7 sind als Kegelrollenlager ausgeführt, die auf einen Lagersitz 8 bzw. 9 des Achszapfens 3 aufgesetzt und an ihrem nach innen weisenden Stirnende jeweils in an sich bekannter Weise mit einem Dichtring 10 bzw. 11 versehen sind.

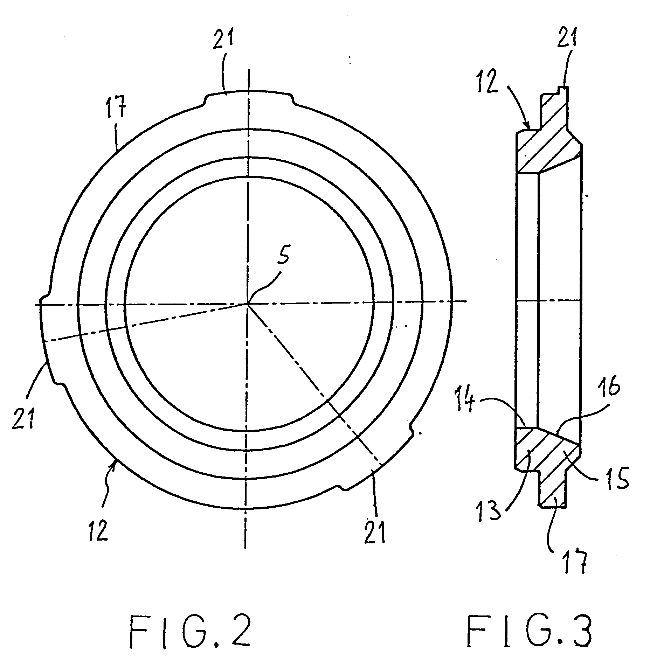

In die Radlagerung einbezogen ist ein innerer Stoßring 12, der einen Zylinderteil 13 mit einer zylindrischen Innenbohrung 14 und einen Bundteil 15 mit einer sich von der zylindrischen Innenbohrung 14 aus kegelförmig erweiternden Innenbohrung 16 und einen sich in Umfangsrichtung erstreckenden Ringbund 17 umfaßt (Fig. 2 und 3). Mit seinem Zylinderteil 13 liegt der Stoßring 12 am Innenring 18 des Lagers 6 an, dessen Außenring 19 am Innenumfang der Radnabe 1 abgestützt ist. Zwischen den Bund 17 des Stoßringes 12 und die angrenzende Stirnseite des Wälzlagers 6 ist eine Dichtungsringeinheit 20 eingesetzt.

Der Stoßring 12 ist an seinem Außenumfang mit zwei, drei oder mehr radial vorstehenden Ansätzen 21 versehen, die in Umfangsrichtung einen ungleichen Winkelabstand voneinander aufweisen. Bei dem dargestellten Beispiel sind drei mit einem Winkelabstand von 100°, 120° und 140° voneinander angeordnete Ansätze 21 am Ringbund 17 des Stoßrings 12 einstückig angeformt. Die Bogenlänge der einzelnen Ansätze 21 nimmt jeweils nur einen Bruchteil des Außenumfangs des Ringbundes 17 ein und beträgt beispielsweise jeweils nur etwa 5 bis 8 % des Kreisumfangs des Ringbundes 17. Der Krümmungsradius des Außenbogens der Ansätze 21 entspricht dabei dem Krümmungsradius einer Aufnahmeringnut 22, die am Innenumfang der Radnabe 1 nahe deren innerem Stirnende 23 eingearbeitet ist. Die axiale Länge der Stoßringansätze 21 ist in bezug auf das Axialmaß der Aufnahmeringnut 22 so mit Spiel bemessen, daß eine relative Drehbewegung der Ansätze 21 in der Ringnut 22 im Betrieb jederzeit gewährleistet ist.

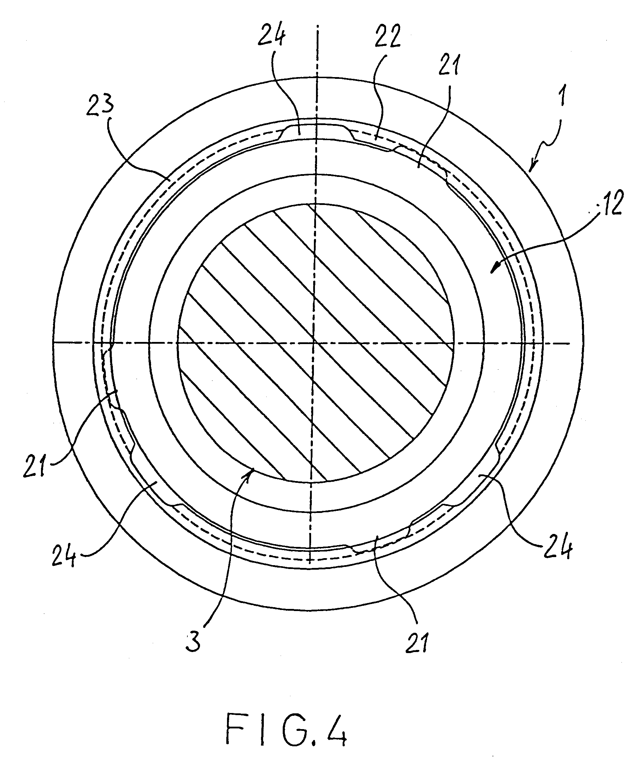

Die innere Aufnahmeringnut 22 ist mit am inneren Stirnende 23 der Radnabe 1 offen ausmündenden Einsetztaschen 24 (vgl. auch Fig. 4) für die Ansätze 21 des Stoßringes 12 versehen. Hierzu sind in eine außenseitig vom Stirnende 23 und innenseitig von der Ringnut 22 begrenzte Ringschulter 23a Ausnehmungen eingearbeitet, die die axial durchgehenden Einsetztaschen 24 für den Durchlaß der Ansätze 21 des Stoßringes 12 bilden. Die Stoßringansätze 21 und die Einsetztaschen bzw. Ausnehmungen 24 stimmen in ihrer Anzahl, Grundform und Beabstandung in Umfangsrichtung am Stoßring 12 bzw. in der Ringschulter 23a der Radnabe 1 überein, so daß, wenn die Ansätze 21 mit den Einsetztaschen 24 in übereinstimmende Drehwinkelausrichtung gebracht worden sind, der Stoßring 12 mit seinen Ansätzen 21 zwanglos durch die Einsetztaschen 24 der Ringschulter 23a von außen hindurchbewegt werden kann, so daß am Ende der Einsetzbewegung die Ansätze 21 in die Ringnut 22, hinter der Innenseite der Ringschulter 23a, eingreifen, wie dies aus Fig. 1 ersichtlich ist.

Eine Festlegung des Stoßrings 12 in der Ringnut 22 mit begrenztem axialem Bewegungsspiel durch seine Ansätze 21 erfolgt durch ein geringfügiges Verdrehen des Stoßringes 12 um die Längsachse 5 des Achszapfens 3 relativ zur Radnabe 1. Die Ansätze 21 bewegen sich dadurch aus ihrer fluchtenden Übereinstimmung mit den Einsetztaschen 24 in Umfangsrichtung heraus und sind somit in der Ringnut 22 gefangen. Diesen, nur geringe Axialbewegungen zulassenden, fixierten Betriebszustand (Momentanzustand) zeigt Fig. 4. Der Drehwinkel zur axialen Festlegung der Stoßringansätze 21 in der Ringnut 22 bei der Montage entspricht dabei zumindest etwa der Bogenlänge der Stoßringansätze 21. Dies bedeutet, daß in der Praxis ein kleiner Drehwinkel von etwa 25° bis etwa 50° bei der Montage des Stoßrings 12 ausreichend ist.

Am äußeren Ende des Achszapfens 3 ist die Lageranordnung 6,7 durch eine auf ein äußeres Gewindeende 25 des Achszapfens 3 aufgeschraubte Achsmutter 26 gegen eine Bewegung in axialer Richtung nach außen festgelegt. Über einen Abschlußring 33 für das äußere Wälzlager 7 ist die Achsmutter 26 am Innenring 31 des Wälzlagers 7 stirnseitig abgestützt, dessen Außenring 32 am Innenumfang der Radnabe 1 abgestützt ist. Der Abschlußring 33 hält das Wälzlager 7 in seiner Position und dient außerdem als Sicherung für eine Lagerfettfüllung. An seinem Innenumfang ist der Abschlußring 33 mit einem Ansatz 50 versehen, mit dem er in einer Einführungsnut 51 am Gewindeende 25 des Achszapfens 3 gehalten ist.

An seinem Außenumfang ist der Abschlußring 33 mit mehreren radial vorstehenden Ansätzen 51 versehen, die in Umfangsrichtung einen ungleichen Winkelabstand voneinander aufweisen. Bei dem dargestellten Beispiel sind drei mit einem Winkelabstand von 100°, 120° und 140° voneinander angeordnete Ansätze 51 am Abschlußring 33 einstückig angeformt. Die Bogenlänge der einzelnen Ansätze 51 nimmt jeweils nur einen Bruchteil des Außenumfangs des Abschlußrings 33 ein und beträgt beispielsweise nur etwa 10% des Kreisumfangs des Abschlußrings 33. Der Krümmungsradius des Außenbogens der Ansätze 51 entspricht dabei dem Krümmungsradius einer weiteren Aufnahmeringnut 28 nahe dem äußeren Stirnende 29. Die axiale Länge der Ansätze 51 des Abschlußrings 33 ist in bezug auf das Axialmaß der Aufnahmeringnutz 28 so mit Spiel bemessen, daß eine relative Drehbewegung der Ansätze 51 in der Ringnut 28 im Betrieb jederzeit gewährleistet ist.

Die äußere Aufnahmeringnut 28 ist mit am äußeren Stirnende 29 der Radnabe 1 offen ausmündenden Einsetztaschen 52 für die Ansätze 51 des Abschlußrings 33 versehen. Hierzu sind in eine außenseitig vom Stirnende 29 und innenseitig von der Ringnut 28 begrenzte Ringschulter 29a Ausnehmungen eingearbeitet, die die axial durchgehenden Einsetztaschen 52 für den Durchlaß der Ansätze 51 des Abschlußrings 33 bilden. Die Abschlußringansätze 51 und die Einsetztaschen bzw. Ausnehmungen 52 stimmen in ihrer Anzahl, Grundform und Beabstandung in Umfangsrichtung am Abschlußring 33 bzw. am Stirnende 29 der Radnabe 1 überein, so daß, wenn die Ansätze 51 mit den Einsetztaschen 52 in übereinstimmende Drehwinkelausrichtung gebracht worden sind, wie dies Fig. 1A veranschaulicht, der Abschlußring 33 mit seinen Ansätzen 51 zwanglos durch die Einsetztaschen 52 der Ringschulter 29a von außen hindurchbewegt werden kann, so daß am Ende der Einsetzbewegung der Ansätze 51 in die Ringnut 28, hinter der Innenseite der Ringschulter 29a, eingreifen, wie dies aus Fig. 1 ersichtlich ist.

Eine Festlegung des Abschlußrings 33 in der Aufnahmenut 28 mit begrenztem axialem Bewegungsspiel durch seine Einsätze 51 erfolgt, wie dies bereits für den im Prinzip entsprechend ausgebildeten Stoßring 12 mit seinen Ansätzen 21 beschrieben worden ist, durch ein geringfügiges Verdrehen des Abschlußrings 33 um die Längsachse 5 des Achszapfens 3 relativ zur Radnabe 1. Die Ansätze 51 bewegen sich dadurch aus ihrer aus Fig. 1A ersichtlichen fluchtenden Übereinstimmung mit den Einsetztaschen 52 in Umfangsrichtung heraus und sind somit in der Ringnut 28 gefangen. Der Drehwinkel zur axialen Festlegung der Ansätze 51 in der Ringnut 28 bei der Montage entspricht dabei zumindest etwa der Bogenlänge der Ansätze 51. Dies bedeutet, daß in der Praxis ein kleiner Drehwinkel von 25° bis etwa 50° bei der Montage des Abschlußrings 33 ausreichend ist. Diese Festlegung des Abschlußrings 33 in der Ringnut 28 erfolgt bei der Bildung einer aus Radnabe und Lageranordnung einschl. des Stoßrings 12 bestehenden Baueinheit vor der Montage auf dem Achszapfen 3.

Die vormontierte Baueinheit aus Radnabe 1 und Lageranordnung einschl. Stoßring 12 wird entsprechend der Darstellung in Fig. 1 durch Aufschrauben der Achsmutter 26 auf das Gewindeende 25 in Anlage an den Abschlußring 33 auf den Achszapfen 3 aufgeschoben, bis die beiden Wälzlager 6 und 7 ihre vorgesehene Position auf den Lagersitzen 8 und 9 erreicht haben und der innere Stoßring 12 mit seiner konisch erweiterten Innenbohrung 16 auf dem seinerseits entsprechend kegelförmigen Übergangsbereich 4 des Achszapfens 3 durch Anpressen festgelegt ist. In dieser Position wird die Achsmutter 26 in an sich bekannter Weise durch einen eingesteckten Sicherungssplint 40 auf dem Gewindeende 25 des Achszapfens 3 festgelegt. Ferner ist eine äußere Staubkappe 41 auf einen Außengewindeteil der Radnabe 1 aufgeschraubt.

Nach einem Abnehmen der Staubkappe 41 und Entfernen des Sicherungssplintes 40 kann die Achsmutter 26 abgeschraubt werden, um die auf dem Achszapfen 3 verbliebene Baueinheit, bestehend aus der Radnabe 1, dem Abschlußring 33, den Lagern 6 und 7 und dem inneren Stoßring 12 einschl. der zugehörigen Lagerdichtungen, komplett vom Achszapfen 3 abzuziehen, indem die Nabe 1 bzw. das auf dieser befindliche Rad von Hand erfaßt und abgezogen wird. Hierzu ist keinerlei Sonderwerkzeug erforderlich.

Es ist aber genausogut möglich, nachdem die Achsmutter 26 vom Achszapfen 3 abgeschraubt worden ist, beispielsweise nur den Zustand des äußeren Wälzlagers 7 zu überprüfen. Hierzu ist es lediglich erforderlich, die Radnabe 1 und den Abschlußring 33 zu entkuppeln, indem eine Relativverdrehung des Abschlußrings 33 in die aus Fig. 1A ersichtliche Montage- bzw. Einsetzposition vorgenommen wird. Der Abschlußring 33 kann in dieser Position zwanglos vom Achszapfen 3 abgezogen werden, so daß sodann das äußere Wälzlager 7 freiliegt und ggf. auch ausgebaut werden kann. Genausogut ist ein Abziehen der Radnabe 1 unter Belassung des inneren Wälzlagers 6 und des Stoßringes 12 auf dem Achszapfen 3 möglich, wenn durch eine Relativverdrehung von Radnabe 1 und Stoßring 12 dessen Ansätze 21 in fluchtende Übereinstimmung mit den Einsetztaschen 24 gebracht werden, was der eingangs erläuterten Montagestellung entspricht. Bei einer Abziehbewegung der Radnabe 1 treten dann die Stoßringansätze 21 zwanglos aus den die Einsetztaschen 24 bildenden Ausnehmungen in der Ringschulter 23a aus.

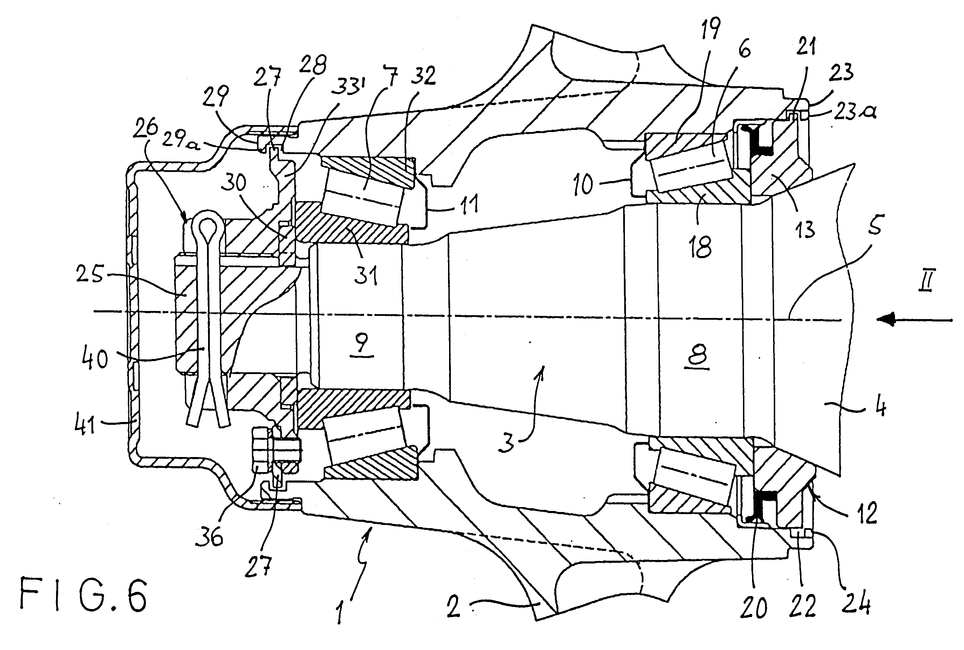

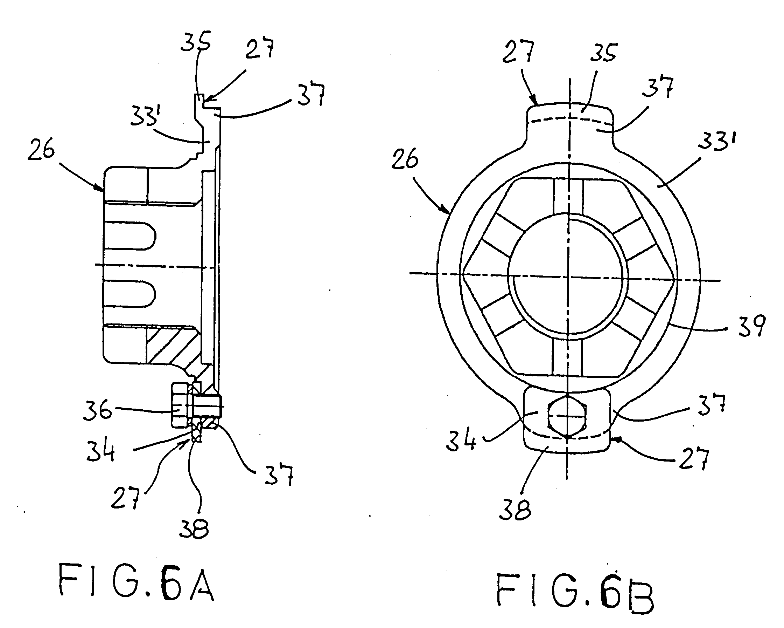

Bei dem Ausführungsbeispiel nach den Figuren 6, 6A und 6B ist der Abschlußring 33 von einem Ringbund 33' der Achsmutter 26 gebildet, der an seinem Außenumfang mit zumindest zwei in Umfangsrichtung voneinander beabstandeten, über seinen Außenumfang radial vorstehenden Ansätzen 27 als Verriegelungs- bzw. Kupplungslaschen versehen ist, die - wie die Ansätze 51 des Abschlußringes 33 - mit der Aufnahmeringnut 28 nahe dem äußeren Stirnende 29 der Radnabe 1 in Kupplungseingriff gebracht werden können. Über eine Zwischenscheibe 30 ist die Achsmutter 26 am Innenring 31 des Lagers 7 stirnseitig abgestützt, dessen Außenring 32 am Innenumfang der Radnabe 1 abgestützt ist.

Bei dem vorliegenden Beispiel sind nur zwei diametral einander gegenüberliegende Ansätze 27 an der Achsmutter 26 bzw. deren Ringbund 33' vorgesehen. Es können jedoch auch mehr als zwei, beispielsweise drei einzelne Ansätze 27 vorgesehen sein, die dann z.B. in einem gleichmäßigen Winkelabstand von 120° am Außenumfang der Achsmutter 26 angeordnet sein können.

Einer der Ansätze 27 ist von einer gesonderten, mit der Achsmutter 26 verschraubbaren Ansatzplatte 34 gebildet, während der dieser gegenüberliegende Ansatz 27 als segmentförmiger Vorsprung 35 einstückig an den Ringbund 33 der Achsmutter 26 angeformt ist. Die Ansatzplatte 34 ist von einer einfachen Blechplatte mit einem Durchgangsloch für eine Befestigungsschraube 36 gebildet. Zum Anschrauben der Ansatzplatte 34 wird die Befestigungsschraube 36 in eine Gewindebohrung des Ringbundes 33 eingeschraubt.

Das Anschrauben der Ansatzplatte 34 erfolgt bei der Bildung der vormontierten Baueinheit vor der Montage auf dem Achszapfen 3, nachdem die Achsmutter 26 in ihrer an das Lager 7 angrenzenden Position mit ihrem den einen Ansatz 27 bildenden segmentförmigen Vorsprung 35 mit zur Aufnahmeringnut 28 konzentrischer äußerer Bogenfläche in die Ringnut 28 der Radnabe 1 eingesetzt worden ist. Die Ansatzplatte 34 mit ihrerseits zur Aufnahmeringnut 28 konzentrischer äußerer Bogenfläche kann ohne weiteres in die mit ihrem äußeren bogenförmigen Randbereich in die Ringnut 23 eingreifende, aus Fig. 6 ersichtliche Position gebracht und mit dem Ringbund 33' verschraubt werden.

Für die Verschraubung besitzt der Ringbund 33' einen nach außen erweiterten Schraubbereich 37, der radial nach außen von dem eigentlichen Außenumfangsteil 38 als Eingriffsbereich der Ansatzplatte 34 übergriffen ist, der wiederum in seiner axialen Länge unter Erhalt eines axialen Bewegungsspiels dem Axialmaß der Aufnahmeringnut 28 angepaßt ist und so in dieser eine Drehbewegung ausführen kann. Die Ansatzposition der Ansatzplatte 34 mit definiertem radialem Vorsprung des in die Ringnut 28 eingreifenden Umfangsteils 38 ist durch eine Ringschulter 39 der Achsmutter 26 vorgegeben, an der die Ansatzplatte 34 mit einem entsprechenden inneren Bogenrand angesetzt wird. Im Bereich des segmentförmigen Vorsprungs 35 hat der Ringbund 33' ebenfalls eine radiale Vergrößerung 37 nach außen, von der der Vorsprung 35 leistenförmig vorspringend mit einer dem Axialmaß der Ringnut 28 angepaßten, seine Drehung in der Ringnut 28 ermöglichenden axialen Länge abgesetzt ist.

Die soweit beschriebene vormontierte Baueinheit aus Radnabe 1 und Lageranordnung einschließlich Achsmutter 26 und Stoßring 12 wird entsprechend der Darstellung in Fig. 6 durch Aufschrauben der Achsmutter 26 auf das Gewindeende 25 des Achszapfens 3 auf diesen aufgeschoben, bis die beiden Wälzlager 6 und 7 ihre vorgesehene Position auf den Lagersitzen 8 und 9 erreicht haben und der innere Stoßring 12 mit seiner konisch erweiterten Innenbohrung 16 auf dem seinerseits entsprechend kegelförmigen Übergangsbereich 4 des Achszapfens 3 durch Anpressen festgelegt ist. In dieser Position wird die Achsmutter 26 in an sich bekannter Weise durch den eingesteckten Sicherungssplint 40 auf dem Gewindeende 25 des Achszapfens 3 festgelegt und die äußere Staubkappe 41 aufgeschraubt, wie dies bereits mit Bezug auf das erste Ausführungsbeispiel erläutert wurde.

Nach einem Abnehmen der Staubkappe 41 und Entfernen des Sicherungssplintes 40 kann die gesamte Baueinheit, bestehend aus der Radnabe 1, den Lagern 6 und 7, dem inneren Stoßring 12 und der Achsmutter 26 mit der zugehörigen Dichtringeinheit 20 und den Dichtringen 10, 11, komplett vom Achszapfen 3 durch Drehen der Achsmutter 26 im Losschraubdrehsinn dadurch abgezogen werden, daß die Radnabe 1 mit dem Stoßring 12 und der Achsmutter 26 durch die in Eingriffsstellung befindlichen Ansätze 21 und 27 gekuppelt ist. Die Achsmutter 26 wirkt dabei als Abziehwerkzeug, indem beim Losschrauben ihre Ansätze 27 an der Innenseite der Ringschulter 29a in Mitnahmeeingriff kommen, während zugleich die Ringschulter 23a am inneren Stirnende 23 der Radnabe 1 auf ihrer Innenseite mit den Stoßringansätzen 21 in Mitnahmeeingriff gelangt. Dieser Mitnahmeeingriff der Stoßringansätze 21 ist bei der im Augenblick der Demontage gegebenen Winkelstellung der Radnabe 1 durch den ungleichen Winkelabstand der Stoßringe 21 durch zumindest einen, zwei oder sämtliche Stoßringansätze 21 im gekuppelten Zustand in der Ringnut 22 bzw. auf der Innenseite der Ringschulter 23a mit hinreichender Sicherheit gewährleistet. Dies gilt auch für das eingangs beschriebene Ausführungsbeispiel, und zwar sowohl hinsichtlich des Stoßringes 12 mit seinen Ansätzen 21, als auch hinsichtlich des Abschlußrings 33 mit seinen Ansätzen 51.

Auch bei diesem Ausführungsbeispiel ist es genausogut möglich, anstelle der gesamten Baueinheit etwa nur die äußere Achsmutter 26 vom Achszapfen 3 abzuschrauben, um beispielsweise den Zustand des äußeren Wälzlagers 7 zu überprüfen. Hierzu ist es lediglich erforderlich, die Radnabe 1 und die Achsmutter 26 zu entkuppeln, indem die radial vorstehenden Ansätze 27 aus ihrer Eingriffsposition innen hinter der Ringschulter 29a herausbewegt werden. Dies erfolgt gegenüber dem Montagevorgang in umgekehrter Reihenfolge, indem zunächst die Ansatzplatte 34 unter Lösen der Befestigungsschraube 36 aus ihrer Stellung hinter der Ringschulter 29a herausgeschwenkt wird, wobei der diametral gegenüberliegende Ansatz 27 im Zuge der Abschraubbewegung der Achsmutter 26 seinerseits durch eine leichte Kippbewegung aus seiner Stellung hinter der Ringschulter 29a herausbewegt werden kann. Ein Abziehen der Radnabe 1 unter Belassung des inneren Wälzlagers 6 und des Stoßrings 12 auf dem Achszapfen 3 ist genausogut möglich, wenn durch eine Relativverdrehung von Radnabe 1 und Stoßring 12 dessen Ansätze 21 in fluchtende Übereinstimmung mit den Einsetztaschen 24 gebracht werden, was der eingangs erläuterten Montagestellung entspricht. Bei einer Abziehbewegung der Radnabe 1 treten dann die Stoßringansätze 21 zwanglos aus den die Einsetztaschen 24 bildenden Ausnehmungen in der Ringschulter 23a aus. Diese Abziehbewegung kann bei der Losschraubbewegung der Achsmutter 26 im mit der Radnabe 1 gekuppelten Zustand der Achsmutteransätze 27 oder, nach Abnahme der Achsmutter 26 zusammen mit dem äußeren Wälzlager 7 durch Abziehen der Radnabe 1 selbst erfolgen.

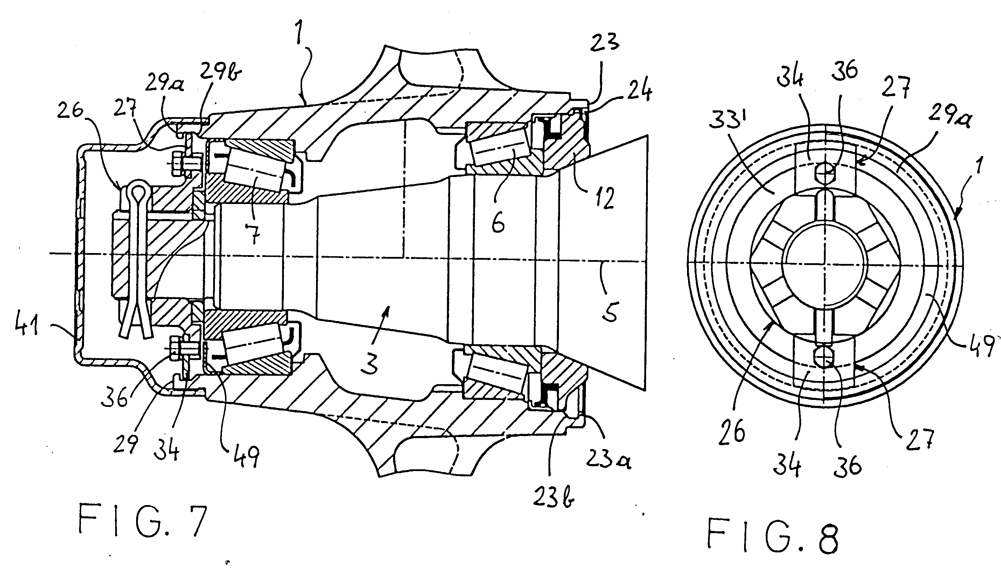

In den Fig. 7 und 8 ist eine Abwandlung der Ausführungsform der Radlagerung nach Fig. 6 dargestellt, bei deren Beschreibung für gleiche bzw. übereinstimmende Bauteile die gleichen Bezugszeichen ohne nochmalige Beschreibung verwendet werden. Dies gilt für sämtliche Ausführungsbeispiele.

Während bei dem Ausführungsbeispiel nach Fig. 6 nur einer der radialen Ansätze 27 der Achsmutter 26 von einer Ansatzplatte 34 gebildet ist, und der dieser diametral gegenüberliegende Ansatz 27 als einstückiger Vorsprung 35 an den Ringbund 33' angeformt ist, sind bei dem vorstehenden Ausführungsbeispiel gemäß den Fig. 7 und 8 beide Ansätze 27 von den mittels der Schraube 36 anschraubbaren Ansatzplatten bzw. -teilen 34 gebildet. Bestehen beide oder sämtliche radial über den Umfang der Achsmutter 26 vorstehende Ansätze 27 aus den verschraubbaren Ansatzplatten 34, ist, insbesondere bei mehr als zwei Ansätzen 27, das Entkuppeln von Achsmutter 26 und Radnabe 1 durch Lösen der Befestigungsschrauben 36 und Herausschwenken der Ansatzplatten 34 aus ihrer Position hinter der Innenseite der Ringschulter 29a für eine einzelne Abnahme nur der Achsmutter 26 vom Achszapfen 3 erleichtert.

Während bei den ersten beiden Ausführungsbeispielen der Ringschulter 29a am äußeren Stirnende 29 und der Ringschulter 23a am inneren Stirnende 23 der Radnabe 1 jeweils zum Inneren der Radlagerung hin eine zur Längsachse 5 des Achszapfens 3 radiale Begrenzungsfläche gegenüberliegt, ist im Unterschied dazu bei dem vorstehenden Ausführungsbeispiel gegenüber der Innenseite der Ringschultern 23a, 29a im axialen Abstand zu diesen eine schräggestellte Begrenzungsfläche 23b bzw. 29b vorgesehen. Diese schräggestellten Begrenzungsflächen 23b, 29b vermitteln den eingeführten Ansätzen 21, 27 von Stoßring 12 und Achsmutter 26 ein montagegünstiges axial begrenztes Bewegungsspiel, das zum Inneren der Radlagerung hin eine weniger scharf konturierte Begrenzung hat, was sich für die Laufeigenschaften der Radlagerung im Betrieb günstig erweist.

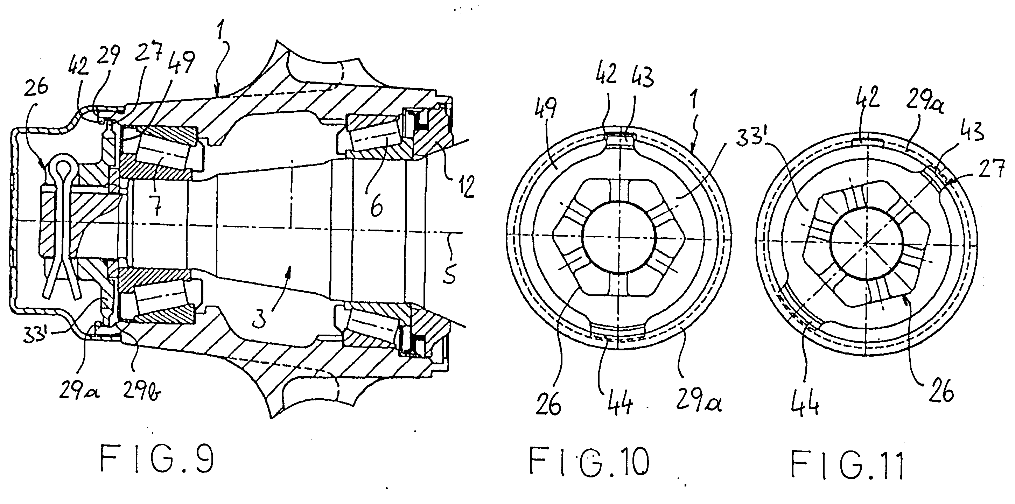

Bei dem Ausführungsbeispiel nach den Fig. 9 bis 11 ist die Kupplung der Achsmutter 26 mit der Radnabe 1 ähnlich der Kupplung des Stoßrings 12 mit der Radnabe 1 dadurch vorgenommen, daß die Ringschulter 29a, wie die Ringschulter 23a am inneren Stirnende 23 der Radnabe 1, mit einer Ausnehmung 42 versehen ist, die eine axial durchgehende Einsatztasche für den Durchlaß eines Ansatzes 43 der Achsmutter 26 bildet. Die Achsmutter 26 weist dabei, analog dem Stoßring 12, in Umfangsrichtung im Abstand zueinander angeordnete Ansätze 43, 44 auf, die einstückig an den Ringbund 33 der Achsmutter 26 angeformt sind. Die beiden Ansätze 43 und 44 der Achsmutter liegen einander diametral gegenüber.

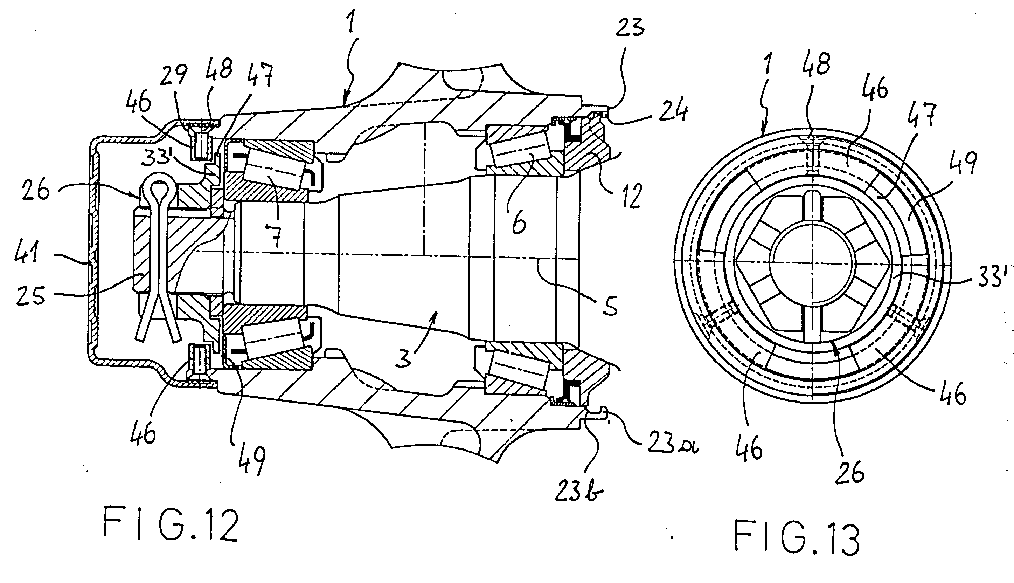

Wie insbesondere aus den Fig. 10 und 11 ersichtlich ist, weisen die beiden Ansätze 43 und 44 der Achsmutter 26 eine unterschiedliche Breite in Umfangsrichtung auf. Obwohl zwei Ansätze 43, 44 vorgesehen sind, ist in der Ringschulter 29a der Radnabe 1 nur eine einzige Ausnehmung bzw. Einsetztasche 42 gebildet, die eine Durchlaßweite in Umfangsrichtung aufweist, die auf die Breite des schmaleren Ansatzes 43 abgestimmt ist.

Zur Montage der vorbeschriebenen Baueinheit wird der breitere Ansatz 44 durch eine leichte Kippbewegung der Achsmutter 26 in eine Position hinter der Innnenseite der Ringschulter 29a in diametraler Gegenüberlage zur Einsetztasche 42 in der Ringschulter 29a gebracht, so daß durch diese der schmalere Ansatz 43 axial hindurchbewegt werden kann. Diesen Einsetzzustand veranschaulicht Fig. 10. Durch eine leichte Verdrehung der Achsmutter 26 gegenüber der Radnabe 1 erfolgt sodann die Betriebskupplung zwischen der Achsmutter 26 und der Radnabe 1 dadurch, daß der Ansatz 43 aus seiner fluchtenden Gegenüberstellung zur Einsetztasche 42 herausbewegt und hinter der Ringschulter 29a gefangen wird. Diesen Betriebszustand veranschaulicht Fig. 11.

Die bei den oben beschriebenen Ausführungsbeispielen gewählte Kupplung der Achsmutter 26 mit der Radnabe 1 kann in gleicher Weise auch für die Kupplung des Stoßringes 12 mit der Radnabe 1 verwendet werden. In allen Fällen ist dabei ein ebenso einfaches Kuppeln wie Entkuppeln der Radnabe 1 mit der Achsmutter 26 bzw. dem Stoßring 12 möglich, wobei das Entkuppeln in der umgekehrten Bewegungsabfolge durchgeführt wird.

Grundsätzlich kann die Kupplung der Radnabe 1 mit dem Stoßring 12 und der Achsmutter 26 auch in umgekehrter Anordnung der radialen Ansätze erfolgen, indem nämlich die Radnabe 1 nahe ihrem inneren und äußeren Stirnende 23, 29 einzelne, über ihren Innenumfang radial einwärts vorstehende Ansätze 46 aufweist, wie dies in den Fig. 12 und 13 am äußeren Stirnende 29 der Radnabe 1 veranschaulicht ist. Die Radnabe 1 ist hierbei dadurch mit der Achsmutter 26 kuppelbar, daß von dieser ein äußerer Umfangsteil 47 hinter die Innenseite der Ansätze 46 geführt wird. Dies läßt sich auf einfache Weise dadurch erreichen, daß bei auf das Gewindeende 25 des Achszapfens 3 aufgeschraubter Position der Achsmutter 26, wie sie aus Fig. 12 ersichtlich ist, radial von außen, bei noch nicht aufgesetzter Staubkappe 41, die radial einwärts vorstehenden Ansätze 46 in einen endseitigen Bereich verkleinerten Durchmessers der Radnabe 1 eingeschraubt werden, um die aus Fig. 12 ersichtliche Position einzunehmen.

Bei dem in den Fig. 12 und 13 dargestellten Ausführungsbeispiel sind drei radial einwärts vorstehende Ansätze 46 im gleichmäßigen Winkelabstand voneinander vorgesehen, die an ihrem Außenumfang und ihrem Innenumfang bogenförmig entsprechend der Radnabe 1 bzw. dem äußeren Umfang der Achsmutter 26, deren Ringbund 33' folgend, gekrümmt sind. Der Ringbund 33' ist dabei seinerseits mit einem Bereich verringerten Durchmessers versehen, der am inneren Ende der Achsmutter 26 von einer Ringschulter begrenzt ist, die bei dem dargestellten Beispiel den äußeren Umfangsteil 47 am Ringbund 33' der Achsmutter 26 bildet, der die radialen Ansätze 46 im gekuppelten Zustand von Radnabe 1 und Achsmutter 26 hintergreift.

Die radial nach innen ragenden Ansätze 46 sind bei dem dargestellten Beispiel von Ansatzteilen in Form von leistenförmigen Hohlprofilkörpern mit einem mittleren Gewindeteil gebildet, in das von außen jeweils eine Senkschraube 48 eingeschraubt wird, um die Ansätze 46 am Innenumfang der Radnabe 1 festzulegen.

Obwohl bei dem Ausführungsbeispiel nach den Fig. 12 und 13 die Anordnung der radial einwärts vorstehenden Ansätze 46 nur in Gegenüberlage zur Achsmutter 26 gezeigt ist, während der Stoßring 12 zu seiner Kupplung mit der Radnabe 1 eine Ausbildung analog den übrigen Ausführungsbeispielen aufweist, versteht sich, daß auch bei dem Ausführungsbeispiel nach den Fig. 12 und 13 die Radnabe 1 an ihrem inneren Stirnende 23 mit solchen inneren Ansätzen 46 versehen sein kann, die dann zur Herbeiführung des Kupplungseingriffs von einem äußeren Umfangsteil bzw. einer Ringschulter des Stoßringes 12 hintergriffen werden, wie umgekehrt die Kupplung der Achsmutter 26 bzw. des Abschlußringes 33 mit der Radnabe 1 mit den gleichen Mitteln durchgeführt werden kann, wie sie im einzelnen für den Stoßring 12 im ersten Ausführungsbeispiel erläutert wurden.

Auch die vorstehend beschriebene Ausführungsform läßt sich wie sämtliche übrigen Ausführungsformen ohne weiteres zu einer Baueinheit vormontieren und durch Aufschrauben der Achsmutter 26 in die Betriebsstellung bringen und bei in Kupplungseingriff stehenden Ansätzen als Ganzes vom Achszapfen 3 abziehen, aber es können auch, durch Abschrauben der Ansätze 46, Einzelteile der Radlagerung vom Achszapfen 3 nach einem Losschrauben und Abnehmen der Achsmutter 26 abgezogen werden. Ein solcher Fall der Einzeldemontage etwa lediglich der Achsmutter 26 kann gegeben sein, wenn das äußere Wälzlager 7, das gegenüber dem Ringbund 33' der Achsmutter 26, wie auch im Falle der übrigen Ausführungsbeispiele, mit einem Fettbegrenzungsring 49 versehen ist, auf seinen Betriebszustand zu untersuchen ist.

## Patentansprüche

1. Radlagerung, mit einer Radnabe (1), die mittels eines inneren und eines äußeren Wälzlagers (6, 7) drehbar auf einem Achszapfen (3) einer Radachse abstützbar ist, einem auf dem Achszapfen (3) angeordneten, dem inneren Wälzlager (6) benachbarten und dem inneren Stirnende (23) der Radnabe (1) zugeordneten Stoßring (12), und mit einer dem äußeren Stirnende (29) der Radnabe (1) zugeordneten Achsmutter (26), die auf das mit Außengewinde versehene Ende (25) des Achszapfens (3) aufschraubbar ist, **dadurch gekennzeichnet,** daß ein mit der Radnabe (1), den Wälzlagern (6,7) und dem Stoßring (12) gemeinsam auf den Achszapfen (3) aufsetzbarer und von diesem abnehmbarer vorderer Abschlußring (33) vorgesehen ist, der Stoßring (12) und der Abschlußring (33) einzelne, über ihren Außenumfang radial vorstehende Ansätze (21, 27; 51) aufweisen, die Radnabe (1) nahe ihrem inneren und äußeren Stirnende (23, 29) mit je einer innenseitig ausgeformten Ringschulter (23a, 29a) versehen ist, und der Stoßring (12) und der Abschlußring (33) mit der Radnabe (1) durch Einführen ihrer radialen Ansätze (21, 27; 51) hinter die Innenseite der zugeordneten Ringschulter (23a, 29a) kuppelbar sind.

2. Radlagerung nach Anspruch 1, dadurch gekennzeichnet, daß der Abschlußring (33) ein gesondertes, der Achsmutter (26) lagerseitig unmittelbar benachbartes Bauteil bildet.

3. Radlagerung nach Anspruch 1, dadurch gekennzeichnet, daß der Abschlußring (33) von einem Ringbund (33') der Achsmutter (26) gebildet ist.

4. Radlagerung nach einem der Ansprüche 1 bis 3, dadurch gekennzeichnet, daß die Ringschultern (23a, 29a) der Radnabe (1) mit zumindest einer Ausnehmung versehen sind, die eine axial durchgehende Einsetztasche (24, 42) für den Durchlaß eines Ansatzes (21, 27) des Stoßrings (12) bzw. des Abschlußrings (33) bildet.

5. Radlagerung nach einem der Ansprüche 1 bis 4, dadurch gekennzeichnet, daß der Abschlußring (33) und/oder der Stoßring (12) in Umfangsrichtung zwei im Abstand zueinander angeordnete Ansätze (43, 44) aufweisen und die Ringschulter (29a, 23a) am äußeren und/oder inneren Stirnende (29, 23) der Radnabe (1) mit einer einzigen Einsetztasche (42) für einen der beiden Ansätze (43, 44) des Abschlußrings (33) und/oder des Stoßringes (12) versehen ist.

6. Radlagerung nach Anspruch 5, dadurch gekennzeichnet, daß die beiden Ansätze (43, 44) des Abschlußrings (33) und/oder des Stoßringes (12) einander diametral gegenüberliegen.

7. Radlagerung nach Anspruch 5 oder 6, dadurch gekennzeichnet, daß die beiden Ansätze (43, 44) des Abschlußrings (33) und/oder des Stoßringes (12) eine unterschiedliche Breite in Umfangsrichtung aufweisen und eine einzige Einsetztasche (42) in der am äußeren bzw. inneren Stirnende (29, 23) der Radnabe (1) gelegenen Ringschulter (29a, 23a) eine Durchlaßweite in Umfangsrichtung aufweist, die auf die Breite des jeweils schmaleren Ansatzes (43) abgestimmt ist.

8. Radlagerung nach einem der Ansprüche 1 bis 7, dadurch gekennzeichnet, daß die radialen Ansätze (27, 21) des Abschlußrings (33) und/oder des Stoßringes (12) einstückig angegeformt sind.

9. Radlagerung nach einem der Ansprüche 1 bis 8, dadurch gekennzeichnet, daß zumindest einer der Ansätze (27) des Abschlußrings (33) und/oder des Stoßringes (12) als gesondertes Ansatzteil (34) ausgebildet ist, das mit dem Abschlußring (33) und/oder dem Stoßring (12) verschraubbar ist.

10. Radlagerung nach einem der Ansprüche 1 bis 4, 8 oder 9, dadurch gekennzeichnet, daß der Abschlußring (33) und/oder der Stoßring (12) mit drei oder mehr in Umfangsrichtung im Abstand zueinander angeordneten radialen Ansätzen (51, 21) versehen sind und die Radnabe (1) in der dem Abschlußring (33) und/oder dem Stoßring (12) zugeordneten Ringschulter (29a, 23a) mehrere Einsetztaschen (52, 24) aufweist, die in ihrer Anzahl, Grundform und gegenseitigen Beabstandung in Umfangsrichtung jeweils auf die Anzahl, die Grundform und die Beabstandung in Umfangsrichtung der Ansätze (51, 21) an dem Abschlußring (33) bzw. am Stoßring (12) abgestimmt sind.

11. Radlagerung nach Anspruch 10, dadurch gekennzeichnet, daß die Ansätze (51, 21) am Abschlußring (33) und/oder am Stoßring (12) in Umfangsrichtung einander mit unterschiedlichen Winkelabständen benachbart sind.

12. Radlagerung nach einem der Ansprüche 1 bis 11, dadurch gekennzeichnet, daß der Innenseite der Ringschultern (23a, 29a) der Radnabe (1) im Abstand eine schräggestellte, den eingeführten Ansätzen von Abschlußring (33) bzw. Stoßring (21) ein begrenztes, axiales Bewegungsspiel belassende Begrenzungsfläche (23b, 29b) gegenüberliegt.

13. Radlagerung, mit einer Radnabe (1), die mittels eines inneren und eines äußeren Wälzlagers (6, 7) drehbar auf einem Achszapfen (3) einer Radachse abstützbar ist, einem auf dem Achszapfen (3) angeordneten, dem inneren Wälzlager (6) benachbarten und dem inneren Stirnende (23) der Radnabe (1) zugeordneten Stoßring (12), und mit einer dem äußeren Stirnende (29) der Radnabe (1) zugeordneten Achsmutter (26), die auf das mit Außengewinde versehene Ende (25) des Achszapfens (3) aufschraubbar ist, dadurch gekennzeichnet, daß die Radnabe (1) nahe ihrem inneren und/oder äußeren Stirnende (23, 29) einzelne, über ihren Innenumfang radial einwärts vorstehende Ansätze (46) aufweist, daß ein mit der Radnabe (1), den Wälzlagern (6,7) und dem Stoßring (12) gemeinsam auf den Achszapfen (3) aufsetzbarer und von diesem abnehmbarer vorderer Abschlußring (33) vorgesehen ist, und daß der Stoßring (12) und der Abschlußring (33) mit der Radnabe (1) durch Einführen eines äußeren Umfangsteils (47) hinter die Innenseite der Ansätze (46) der Radnabe (1) mit dieser kuppelbar sind.

14. Radlagerung nach Anspruch 13, dadurch gekennzeichnet, daß die radialen Ansätze (46) der Radnabe (1) an deren Innenumfang einstückig angeformt sind.

15. Radlagerung nach Anspruch 14, dadurch gekennzeichnet, daß zumindest einer der Ansätze (46) der Radnabe (1) als gesondertes, mit der Radnabe (1) verschraubbares Ansatzteil ausgebildet ist.

16. Radlagerung nach einem der Ansprüche 13 bis 15, dadurch gekennzeichnet, daß die Radnabe (1) nahe ihrem inneren und/oder äußeren Stirnende (23, 29) jeweils mit drei oder mehr in Umfangsrichtung im Abstand zueinander angeordneten radialen Ansätzen (46) versehen ist und der Stoßring (12) und/oder der vordere Abschlußring (33) mehrere Einsetztaschen (24, 52) aufweisen, die in ihrer Anzahl, Grundform und gegenseitigen Beabstandung in Umfangsrichtung jeweils auf die Anzahl, die Grundform und die Beabstandung in Umfangsrichtung der Ansätze (46) der Radnabe (1) abgestimmt sind.

17. Radlagerung nach Anspruch 16, dadurch gekennzeichnet, daß die Ansätze (46) am inneren und/oder äußeren Stirnende (23,29) der Radnabe (1) einander in Umfangsrichtung mit unterschiedlichen Winkelabständen benachbart sind.

## Claims

1. A wheel mounting, having a wheel hub (1) which is rotatably supportable on an axle stub (3) of a wheel axle by means of an inner and an outer rolling bearing (6, 7), having, adjacent the inner rolling bearing (6) and associated with the inner face end (23) of the wheel hub (1), a butt ring (12) disposed on the axle stub (3), and having, associated with the outer face end (29) of the wheel hub (1), an axle nut (26), which is screwable to the end (25), provided with external thread, of the axle stub (3), **characterised in that** there is provided a front closing ring (33) mountable upon the axle stub (3) and removable from same together with the wheel hub 1, the rolling bearings (6,7) and the butt ring (12), in that the butt ring (12) and the closing ring (33) have individual projections (21, 27; 51) projecting radially beyond their outer circumference, in that the wheel hub (1) is provided, adjacent its inner and its outer face end (23, 29), with one internally shaped annular shoulder (23a, 29a) each, and in that the butt ring (12) and the closing ring (33) are coupleable to the wheel hub (1) by introduction of their radial projections (21, 27; 51) behind the inner side of the associated annular shoulder (23a, 29a).

2. A wheel mounting according to Claim 1, characterised in that the closing ring (33) forms a discrete component immediately adjacent the axle nut (26) on the bearing side.

3. A wheel mounting according to Claim 1, characterised in that the closing ring (33) is formed by an annular collar (33') of the axle nut (26).

4. A wheel mounting according to any one of Claims 1 to 3, characterised in that the annular shoulders (23a, 29a) of the wheel hub (1) are provided with at least one recess, which forms an axially through-going inserting pocket (24, 42) for the passage of a projection (21, 27) of the butt ring (12) or respectively of the closing ring (33).

5. A wheel mounting according to any one of Claims 1 to 4, characterised in that the closing ring (33) and/or the butt ring (12) have two projections (43, 44) arranged at a spacing from one another in the circumferential direction, and in that the annular shoulder (29a, 23a) at the outer and/or inner face end (29, 23) of the wheel hub (1) is provided with one single inserting pocket (42) for one of the two projections (43, 44) of the closing ring (33) and/or of the butt ring (12).

6. A wheel mounting according to Claim 5, characterised in that the two projections (43, 44) of the closing ring (33) and/or of the butt ring (12) are located diametrically opposite one another.

7. A wheel mounting according to Claim 5 or 6, characterised in that the two projections (43, 44) of the closing ring (33) and/or of the butt ring (12) have a different width in the circumferential direction and in that one single inserting pocket (42) in the annular shoulder (29a, 23a) situated at the outer or respectively inner face end (29, 23) of the wheel hub (1) has a passage width in the circumferential direction which is matched to the width of the respectively narrower projection (43).

8. A wheel mounting according to any one of Claims 1 to 7, characterised in that the radial projections (27, 21) of the closing ring (33) and/or of the butt ring (12) are integrally formed.

9. A wheel mounting according to any one of Claims 1 to 8, characterised in that at least one of the projections (27) of the closing ring (33) and/or of the butt ring (12) are formed as discrete projecting part (34) which is screwable to the closing ring (33) and/or to the butt ring (12).

10. A wheel mounting according to any one of claims 1 to 4, 8 or 9, characterised in that the closing ring (33) and/or the butt ring (12) are provided with three or more radial projections (51, 21) arranged at a spacing from one another in the circumferential direction and in that the wheel hub (1) has, in the annular shoulder (29a, 23a) associated with the closing ring (33) and/or with the butt ring (12), several inserting pockets (52, 24) which are respectively matched in their number, basic shape and mutual spacing in the circumferential direction to the number, the basic shape and the spacing in the circumferential direction of the projections (51, 21) on the closing ring (33) or respectively on the butt ring (12).

11. A wheel mounting according to Claim 10, characterised in that the projections (51, 21) on the closing ring (33) and/or on the butt ring (12) are adjacent to one another at different angular spacings in the circumferential direction.

12. A wheel mounting according to any one of Claims 1 to 11, characterised in that the inner side of the annular shoulders (23a, 29a) of the wheel hub (1) is situated at a spacing opposite an inclined limiting surface (23b, 29b) allowing a limited, axial motional play to the introduced projections of closing ring (33) or respectively butt ring (12).

13. A wheel mounting, having a wheel hub (1) which is rotatably supportable on an axle stub (3) of a wheel axle by means of an inner and an outer rolling bearing (6, 7), having, adjacent to the inner rolling bearing (6) and associated with the inner face end (23) of the wheel hub (1), a butt ring (12) disposed on the axle stub (3), and having, associated with the outer face end (29) of the wheel hub (1), an axle nut (26), which is screwable to the end (25), provided with external thread, of the axle stub (3), characterised in that the wheel hub (1), adjacent its inner and/or outer face end (23, 29), has individual projections (46) protruding radially inwards beyond its inner circumference, in that there is provided a front closing ring (33) mountable upon the axle stub (3) and removable from same together with the wheel hub (1), the rolling bearings (6,7) and the butt ring (12), and in that the butt ring (12) and the closing ring (33) are coupleable to the wheel hub (1) by introduction of an outer circumferential portion (47) behind the inner side of the projections (46) of the wheel hub (1).

14. A wheel mounting according to Claim 13, characterised in that the radial projections (46) of the wheel hub (1) are formed integrally on its inner circumference.

15. A wheel mounting according to Claim 14, characterised in that at least one of the projections (46) of the wheel hub (1) is formed as discrete projecting part screwable to the wheel hub (1).

16. A wheel mounting according to any one of Claims 13 to 15, characterised in that the wheel hub (1), adjacent its inner and/or outer face end (23, 29), is provided with three or more radial projections (46) each, arranged at a spacing from one another in the circumferential direction, and in that the butt ring (12) and/or the front closing ring (33) have several inserting pockets (24, 52) which are respectively matched in their number, basic shape and mutual spacing in the circumferential direction to the number, the basic shape and the spacing in the circumferential direction of the projections (46) of the wheel hub (1).

17. A wheel mounting according to Claim 16, characterised in that the projections (46) on the inner and/or outer face end (23,29) of the wheel hub (1) are adjacent to one another at different angular spacings in the circumferential direction.

## Revendications

1. Palier de roue comportant un moyeu de roue (1), qui, au moyen d'un roulement intérieur et d'un roulement extérieur (6, 7), peut prendre appui à rotation, sur une fusée d'essieu (3), une bague de butée (12) disposée sur la fusée d'essieu (3), à proximité du roulement intérieur (6) et associée à l'extrémité d'about intérieure (23) du moyeu de roue (1), et un écrou d'essieu (26) associé à l'extrémité d'about extérieure (29) du moyeu de roue (1), qui peut être vissé sur l'extrémité (25) pourvue d'un filet mâle de la fusée d'essieu (3), caractérisé en ce qu'il est prévu une bague de fermeture antérieure (33) pouvant être placée en même temps que le moyeu de roue (1), les roulements (6, 7) et la bague de butée (12) sur la fusée d'essieu (3) et pouvant être enlevée de celle-ci, en ce que la bague de butée (12) et la bague de fermeture (33) présentent des saillies individuelles (21, 27; 51), débordant radialement de leur périphérie extérieure, en ce que le moyeu de roue (1) est pourvu, à proximité de ses extrémités d'about intérieure et extérieure (23, 29) d'un épaulement annulaire (23a, 29a) chaque fois formé du côté intérieur et en ce que la bague de butée (12) et la bague de fermeture (33) peuvent être accouplées au moyeu de roue (1) par l'introduction de leurs saillies radiales (21, 27; 51) derrière la face intérieure de l'épaulement annulaire (23a, 29a) associé.

2. Palier de roue suivant la revendication 1, caractérisé en ce que la bague de fermeture (33) forme un élément séparé, immédiatement voisin de l'écrou d'essieu (26) du côté du roulement.

3. Palier de roue suivant la revendication 1, caractérisé en ce que la bague de fermeture (33) est formée par une collerette annulaire (33') de l'écrou d'essieu (26).

4. Palier de roue suivant l'une quelconque des revendications 1 à 3, caractérisé en ce que les épaulements annulaires (23a, 29a) du moyeu de roue (1) sont pourvus, d'au moins un évidement, qui constitue un logement d'insertion de traversée dans le sens axial (24, 42) pour le passage d'une saillie (21, 27) de la bague de butée (12) ou de la bague de fermeture (33).

5. Palier de roue suivant l'une quelconque des revendications 1 à 4, caractérisé en ce que la bague de fermeture (33) et/ou la bague de butée (12) présentent deux saillies (43, 44) espacées l'une de l'autre sur la périphérie et en ce que l'épaulement annulaire (29a, 23a) est pourvu à l'extrémité d'about extérieure et/ou intérieure (29, 23) du moyeu de roue (1) d'un logement d'insertion unique (42) pour une des deux saillies (43, 44) de la bague de fermeture (33) et/ou de la bague de butée (12).

6. Palier de roue suivant la revendication 5, caractérisé en ce que les deux saillies (43, 44) de la bague de fermeture (33) et/ou de la bague de butée (12) sont situées dans des positions diamétralement opposées l'une par rapport à l'autre.

7. Palier de roue suivant la revendication 5 ou 6, caractérisé en ce que les deux saillies (43, 44) de la bague de fermeture (33) et/ou de la bague de butée (12) présentent une largeur différente dans le sens périphérique et en ce qu'un logement d'insertion (42) dans l'épaulement annulaire (29a, 23a) situé à l'extrémité d'about extérieure ou intérieure (29, 23) du moyeu de roue (1) présente une largeur de passage dans le sens périphérique qui est adaptée à la largeur de la saillie respectivement la plus étroite (43).

8. Palier de roue suivant l'une quelconque des revendications 1 à 7, caractérisé en ce que les saillies radiales (27, 21) de la bague de fermeture (33) et/ou de la bague de butée (12) sont formées d'une seule pièce.

9. Palier de roue suivant l'une quelconque des revendications 1 à 8, caractérisé en ce qu'au moins une des saillies (27) de la bague de fermeture (33) et/ou de la bague de butée (12) est réalisée sous la forme d'une saillie séparée (34) qui peut être vissée sur la bague de fermeture (33) et/ou sur la bague de butée (12).

10. Palier de roue suivant l'une quelconque des revendications 1 à 4, 8 ou 9, caractérisé en ce que la bague de fermeture (33) et/ou la bague de butée (12) sont pourvues de trois ou plus de trois saillies radiales (51, 21) espacées les unes des autres dans le sens périphérique et en ce que le moyeu de roue (1) présente, dans l'épaulement annulaire (29a, 23a) correspondant à la bague de fermeture (33) et/ou à la bague de butée (12), plusieurs logements d'insertion (52, 24) qui, par leur nombre, leur forme de base et leur écartement mutuel dans le sens périphérique correspondent au nombre, a la forme de base et à l'écartement mutuel dans le sens périphérique des saillies (51, 21) de la bague de fermeture (33) et/ou de la bague de butée (12).

11. Palier de roue suivant la revendication 10, caractérisé en ce que les saillies (51, 21) de la bague de fermeture (33) et/ou de la bague de butée (12) sont mutuellement séparées dans le sens périphérique par des distances angulaires variables.

12. Palier de roue suivant l'une quelconque des revendications 1 à 11, caractérisé en ce qu'une surface de délimitation inclinée (23b, 29b) est située à une certaine distance en face du côté intérieur des épaulements annulaires (23a, 29a) du moyeu de roue (1), laissant aux saillies de la bague de fermeture (33) et/ou de la bague de butée (21) un jeu de mouvement limité en direction axiale.

13. Palier de roue, comportant un moyeu de roue (1), qui, au moyen d'un roulement intérieur et d'un roulement extérieur (6, 7), peut prendre appui à rotation sur une fusée d'essieu (3), une bague de butée (12) disposée sur la fusée d'essieu (3), à proximité du roulement intérieur (6) et associée à l'extrémité d'about intérieure (23) du moyeu de roue (1), et un écrou d'essieu (26), associé à l'extrémité d'about extérieure (29) du moyeu de roue (1), qui peut être vissé sur l'extrémité (25) pourvue d'un filet mâle de la fusée d'essieu (3), caractérisé en ce que le moyeu de roue (1) présente, à proximité de son extrémité d'about intérieure et/ou extérieure (23, 29), des saillies individuelles (46) dépassant radialement vers l'intérieur de sa périphérie Intérieure, en ce qu'il est prévu une bague de fermeture avant (33) pouvant être placée en même temps que le moyeu de roue (1), les roulements (6, 7) et la bague de butée (12) sur la fusée d'essieu (3) et pouvant être enlevée de cette dernière, et en ce que la bague de butée (12) et la bague de fermeture (33) peuvent être accouplées avec le moyeu de roue (1) par l'introduction d'une pièce périphérique extérieure (47) derrière la face intérieure des saillies (46) du moyeu de roue (1).

14. Palier de roue suivant la revendication 13, caractérisé en ce que les saillies radiales (46) du moyeu de roue (1) sont formées d'une seule pièce à la périphérie de ce dernier.

15. Palier de roue suivant la revendication 14, caractérisé en ce qu'au moins une des saillies (46) du moyeu de roue (1) est réalisée sous la forme d'une saillie séparée pouvant être vissée sur le moyeu de roue (1).

16. Palier de roue suivant l'une quelconque des revendications 13 à 15, caractérisé en ce que le moyeu de roue (1) présente, à proximité de chacune de ses extrémités frontales intérieure et/ou extérieure (23, 29), trois ou plus de trois saillies radiales (46) espacées l'une de l'autre sur la périphérie et en ce que la bague de butée (12) et/ou la bague de fermeture avant (33) présentent plusieurs logements d'insertion (24, 52), qui, par leur nombre, leur forme de base et leur espacement mutuel dans le sens périphérique correspondent au nombre, à la forme de base et à l'espacement mutuel dans le sens périphérique des saillies (46) du moyeu de roue (1).

17. Palier de roue suivant la revendication 16, caractérisé en ce que les saillies (46) à l'extrémité d'about intérieure et/ou extérieure (23, 29) du moyeu de roue (1) sont mutuellement espacées dans le sens périphérique par des distances angulaires variables.
